# EUROPEAN PATENT SPECIFICATION

(11) **EP 2 807 848 B1**
(45) Date of publication and mention of the grant of the patent: **16.05.2018**
(21) Application number: 12741381.3
(22) Date of filing: 13.06.2012
(51) Int. Cl.: H04W 12/12

(54) **A SYSTEM AND A METHOD FOR DETECTING LOST CAMERA USAGE**
SYSTEM UND EIN VERFAHREN ZUM NACHWEIS DES GEBRAUCHS EINES VERLORENEN KAMERAS
SYSTÈME ET PROCÉDÉ DE DÉTECTION D'UTILISATION D'UN CAMÉRA PERDU

(30) Priority: 25.01.2012 TR 201200916
(43) Date of publication of application: 03.12.2014
(73) Proprietor: Aselsan Elektronik Sanayi ve Ticaret Anonim Sirketi, 06370 Ankara (TR)
(72) Inventor: OZGUL, Ahmet Tahsin, 06370 Ankara (TR); ASLANGUL, Suleyman Alpay, 06370 Ankara (TR); TURGUT, Cevahir, 06370 Ankara (TR)
(74) Representative: Yamankaradeniz, Kemal
(86) International application number: PCT/IB2012/052987
(87) International publication number: WO 2013/110976

(56) References cited:
- WO-A1-2009/018125
- US-A1- 2005 231 357

## Description

### Field of the Invention

The present invention relates to systems which prevent stolen or lost cameras from being used against their real owners.

### Background of the Invention

In our day, there are applications for mobile devices rather than leaving cameras out of use by remotely controlling them. The applications for lost or stolen cameras are generally on preventing the information in the storage from being seen by encryption. There are systems which do identity authentication by various techniques for entry of authorized users only. However, there is no application wherein malicious usage of a stolen or lost camera (thermal, night vision etc.) is prevented by detecting it at a determined area at the moment it is used.
The Great Britain patent document no. GB2407458 discloses a method which prevents the use of a lost or stolen device by sending a blocking code and preventing operation of one or more functions of the device.
The Great Britain patent document no. GB2380356 discloses the method of remotely disabling or locking mobile communication devices by sending a locking message.

The United States of America patent document no. US2005231357 discloses a camera includes: a CMOS image sensor which converts input light so as to obtain image data; a GPS/LPS section or a non-contact ID-chip reading section, which detects the location of the camera itself; an operation restricting condition setting section which determines whether or not the detected location is inside of a predetermined area; and an operation controlling section. If it is determined that the location of the camera itself is outside of the predetermined area, the operation controlling section restricts the image pickup operation in the CMOS sensor.

### Summary of the Invention

The objective of this invention is to provide a system and method which enable to detect lost or stolen cameras in the case that they are used in a determined area.

Another objective of this invention a system per claim 6 and a method per claim 1 which enable to detect if stolen or lost cameras are used against their real owners in a predetermined area.

### Detailed Description of the Invention

"A System and Method for Detecting Lost Cameras" developed to fulfill the objectives of the present invention is illustrated in the accompanying figures, in which:

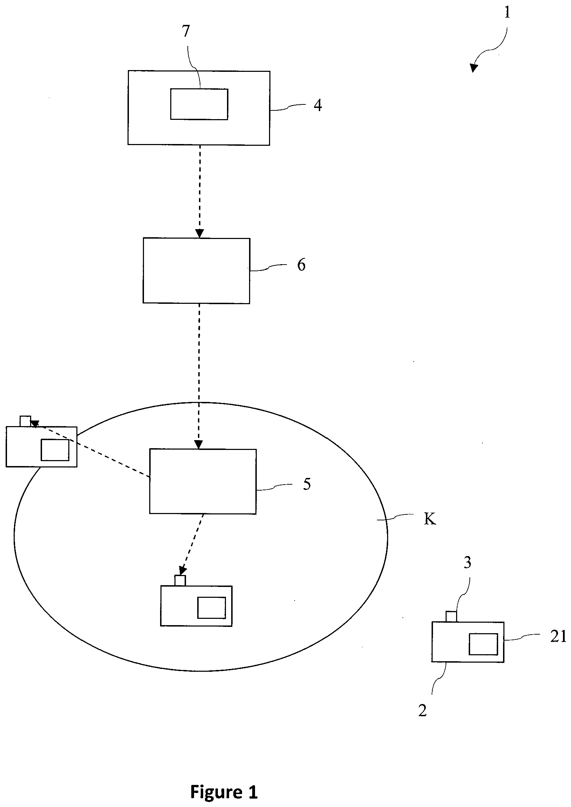

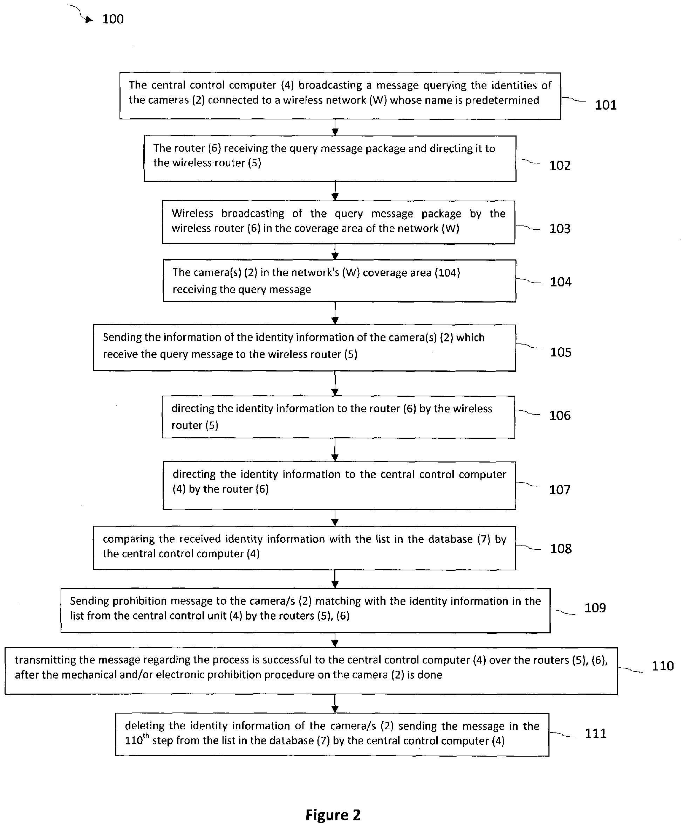

Figure 1 is the schematic view of the inventive system and data flow.
Figure -2 is the flow chart of the inventive method.
The components in the figures are numbered individually, where the numbers refer to the following:
1. System
2. Camera
   21. Network finder unit
3. Communication interface card
4. Central control computer
5. Wireless Router
6. Router
7. Database
100. Method
W. Wireless network

The system (1), which enables to detect if the stolen or lost cameras (thermal, night vision etc) are used against their real owners in a predetermined area, essentially comprises
- at least one camera (2),
- at least one communication interface card (3) on the camera (2) which enables the camera (2) to communicate with the outside,
- at least one central control computer (4) which is connected to a wireless network (W) (Wi-Fi network) whose name (SSID) is pre-determined,
- at least one wireless router (5) which directs the data package exchange in the coverage area of the predetermined wireless network (W),
- at least one router (6) which directs the data package exchange between the wireless router (5) and the central control computer (4),
- at least one database (7) wherein the identities (IP numbers) of the lost cameras (2) are stored.

In the inventive lost camera detection system (1), the communication interface card (3) on the camera (2) is the piece which enables the camera (2) to broadcast to receive the broadcasts from outside and to make data communication. The communication interface card (3) has a plurality of ports (abstract connection point) preferred in accordance with the communication protocol to be used.

The central control computer (4) is connected to a wireless network (W) whose name is predetermined and the wireless network (W) broadcasts a message that checks the identity information of the cameras (2) in the coverage area.

The wireless router (5) directs the bidirectional data communication between the cameras (2) in the coverage area of the wireless network (W) whose name is predetermined and the router (6).

The router (6) directs the bidirectional data exchange between the wireless router (5) in the coverage area of the wireless network whose name is predetermined and the central control computer (4).

The database (7) is the unit wherein the IP numbers of the stolen or lost cameras (2) are stored.

The method (100), which enables to communicate with the cameras (2) in the coverage area of a predetermined wireless network (W) and to detect the use of lost cameras (2), comprises the steps of
- the central control computer (4) broadcasting a message querying the identities of the cameras (2) connected to a wireless network (W) whose name is predetermined (101),
- the router (6) receiving the query message package and directing it to the wireless router (5) (102),
- the wireless router (6) broadcasting the query message package wirelessly in the coverage area of the network (W) (103),
- the camera(s) (2) in the network's (W) coverage area receiving the query message (104),
- sending the information of the identity information of the camera(s) (2) which receive the query message to the wireless router (5) (105),
- the wireless router (5) directing the identity information to the router (6) (106)
- the router (6) directing the identity information to the central control computer (4) (107),
   the central control computer (4) comparing the list in the database (7) with the received identity information (108),
- sending prohibition message to the camera(s) (2) matching with the identity information in the list from the central control unit (4) by means of the routers (5), (6) (109),
- transmitting the message regarding the process is successful to the central control computer (4) over the routers (5), (6), after the mechanical and/or electronic prohibition procedure on the camera (2) is done (110),
- the central control computer (4) deleting the identity information of the camera(s) (2) sending the message in the 110^{th} step from the list in the database (7) (111).

In the inventive method (100), the central control computer is connected to a wireless network (W) and the central control computer (4) broadcasts a message querying the identity information of cameras (2) in the environment to make detection in are instead of broadcasting the identity information of the lost cameras (101).

In the preferred embodiment of the invention, the central control computer (4) uses UDP (User Datagram Protocol) package while broadcasting the query message.

This broadcasted message is received by the router (6) which is connected to the central control computer (4). The router (6) directs the received message to the wireless router (5) in the wireless network (W) in the environment wherein the lost camera (2) detection will be performed (102). The wireless router (5) which receives the query message broadcasts it wirelessly in the wireless network (W) coverage area where it is located (103).

The communication interface card (3) enables the camera(s) (2) in the network (W) coverage area to receive the query message (104) and to send the identity information to the wireless router (5) (105).

In the preferred embodiment of the invention, the camera(s) (2) send their identity information through Ethernet.

The wireless router (5) directs the identity information which it receives from the camera(s) (2) to the router (6) connected to the central control computer (4); and the router (5) directs the received information to the central control computer (4) (106), (107).

In the database (7), there is a list of identity information of the camera(s) (2) which are reported by the users as lost or stolen. The central control computer (4) compares the identity information which it receives from the router (6) with the list in the database (7) (108). If the identity information in the list is accessed, a prohibition message is sent to the camera(s) (2) to which this information belongs (109).

In the preferred embodiment of the invention, the central control computer (4) sends the prohibition message as TCP (Transmission Control Protocol) package.

After the camera(s) (2) receive the prohibition message, they apply the prohibition procedure (erasing the memory, obscuring the lens etc.) which is determined by the user. In order to guarantee that the camera (2) is completely prohibited, the message, which is broadcasted by the cameras (2) to indicate that the process is successful after the procedure is completed, is transmitted to the central control computer (4) by means of the routers (5), (6) (109). Receiving the message that the process is successful, the central control computer (4) deletes the identity information of the prohibited camera(s) (2) from the list (110).

In a preferred embodiment of the invention, the central control computer (4) in the system (1) wirelessly notifies that the use of the camera in the coverage area of the connected network (W) is detected, by using the communication information of the real owner of the camera in the database (7).

When the network finder unit (21) on the camera (2) in the inventive system (1) finds the network (W) that the central control computer (4) is connected to while the camera (2) is connected to any wireless network, it cuts the connection of the camera (2) with the network that it is connected to and enables to connect it to the network (W) that the central control computer (4) is connected to.

By the inventive system (1) and method (100) for detecting lost camera usage, usage of cameras (2), which are lost or stolen especially while being used for military purposes by the people who capture them, against their real owners is prevented. When the camera (2) enters the area that poses a threat, it is detected and possible attacks are prevented.

Moreover, as the identity information of the lost camera (2) is not broadcasted, it is prevented from being captured by undesired people.

Within the framework of these basic concepts, it is possible to develop a wide variety of embodiments of the inventive system (1) and method (100) for detecting lost camera usage. The invention cannot be limited to the examples described herein; it is essentially as defined in the claims.

## Claims

1. A method (100) for detecting lost camera usage, which enables to detect if stolen or lost cameras are used against their real owners in a predetermined area **comprising;**
- at least one camera (2) comprising a communication interface card (3) that enables the camera to make data communication with the outside,
- at least one database (7) wherein the identities of lost or stolen cameras (2) are stored in a list,
- at least one wireless router (5) which directs the data packet exchange in the coverage area of a predetermined wireless network (W) whose name is predetermined,
- at least one central control computer (4) which is connected to said wireless network (W),
- at least one router (6) which directs the data packet exchange between the wireless router (5) and central control computer (4),
the method (100) further comprising
- the central control computer (4) broadcasting (101) a message querying the identities of the cameras (2) connected to said wireless network (W),
- the router (6) receiving the query message packet and directing it to the wireless router (5) (102),
- the wireless router (5) broadcasting the query message packet wirelessly in the coverage area of the network (W) (103),
- the camera(s) (2) in the network's (W) coverage area receiving the query message (104),
- said camera(s) (2) receiving the query message, sending the information of their identity information (105) to the wireless router (5),
- the wireless router (5) directing (106) the identity information to the router (6),
- the router (6) directing (107) the identity information to the central control computer (4),
- the central control computer (4) comparing (108) the received identity information with the list in the database (7),
- sending prohibition message (109) to the camera(s) (2) matching with the identity information in the list from the central control computer (4) by means of the routers (5), (6),
- camera(s) (2) receiving the prohibition message, applying the mechanical and/or electronic prohibition procedure and transmitting the message regarding the process is successful after the procedure is completed (110) to the central control computer (4) over the routers (5), (6),,
- when receiving the message that the process is successful, the central control computer (4) deleting (111) the corresponding identity information of the camera(s) from the list in the database (7) (111).

2. A method (100) for detecting lost camera usage according to Claim 1, **characterized in that** UDP package is used while broadcasting the query message in the step of broadcasting a message querying the identities of the cameras (2) to the central control computer (4) connected to a predetermined wireless network (W) (101).

3. A method (100) for detecting lost camera usage according to any of the preceding claims, **characterized in that** the camera(s) (2) send their message data through Ethernet in the step of sending the information of the identity information of the camera(s) (2) which take the query message to the wireless router (5) (105).

4. A method (100) for detecting lost camera usage according to any of the preceding claims, **characterized in that** the camera(s) (2) send their message data through Ethernet in the step of transmitting the message regarding the process is successful to the central control computer (4) over the routers (5), (6), after the mechanical and/or electronic prohibition procedure on the camera (2) is done (110).

5. A method (100) for detecting usage of a lost camera according to any of the preceding claims, **characterized in that** the central control computer (4) sends the prohibition message as TCP package in the step of the sending prohibition message to the camera(s) (2) matching with the identity information in the list from the central control unit (4) by the routers (5), (6) (109).

6. A system (1) for detecting lost camera usage, which enables to detect if stolen or lost cameras are used against their real owners in a predetermined area **comprising;**
- at least one camera (2) comprising a communication interface card (3) that adapted to enable the camera to make data communication with the outside,
- at least one database (7) wherein the identities of lost or stolen cameras (2) are stored in a list,
- at least one wireless router (5) which is adapted to direct the data packet exchange in the coverage area of a predetermined wireless network (W) whose name is predetermined,
- at least one central control computer (4) which is adapted to be connected to said wireless network (W),
- at least one router (6) which is adapted to direct the data packet exchange between the wireless router (5) and central control computer (4),
the system (1) further comprising
- the central control computer (4) adapted to broadcast (101) a message querying the identities of the cameras (2) connected to said wireless network (W),
- the router (6) adapted to receive the query message packet and directing it to the wireless router (5) (102),
- the wireless router (5) adapted to broadcast the query message packet wirelessly in the coverage area of the network (W) (103),
- the camera(s) (2) in the network's (W) coverage area adapted to receive the query message (104),
- said camera(s) (2) receiving the query message, adapted to send the information of their identity information (105) to the wireless router (5),
- the wireless router (5) adapted to direct (106) the identity information to the router (6),
- the router (6) adapted to direct (107) the identity information to the central control computer (4),
- the central control computer (4) adapted to compare (108) the received identity information with the list in the database (7),
- the central control computer (4) adapted to send prohibition message (109) to the camera(s) (2) matching with the identity information in the list from the central control computer (4) by means of the routers (5), (6),
- camera(s) (2) receiving the prohibition message, adapted to apply the mechanical and/or electronic prohibition procedure and transmitting the message regarding the process is successful after the procedure is completed (110) to the central control computer (4) over the routers (5), (6),
- when receiving the message that the process is successful, the central control computer (4) adapted to delete (111) the corresponding identity information of the camera(s) from the list in the database (7) (111).

7. A system (1) for detecting lost camera usage according to Claim 6, **characterized by** the communication interface card (3) which has a plurality of ports preferred in accordance with the communication platform to be used.

8. A system (1) for detecting lost camera usage according to Claims 6 and 7, **characterized by** the database (7) in which the communication information of the real owner of the camera is (2) stored.

9. A system (1) for detecting lost camera usage according to Claims 6 to 8, **characterized by** the central control computer (4) which is adapted to wirelessly transmit the information of whether the lost or stolen camera (2) is in use to the communication information in the database (7).

## Patentansprüche

1. Verfahren (100) zum Detektieren der Verwendung einer verlorenen Kamera, das ermöglicht, zu detektieren, ob gestohlene oder verlorene Kameras gegen ihre wahren Besitzer in einem vorbestimmten Bereich verwendet werden, umfassend:
- mindestens eine Kamera (2), umfassend eine Kommunikationsschnittstellenkarte (3), die der Kamera ermöglicht, Datenkommunikation mit der Außenwelt zu vollführen,
- mindestens eine Datenbank (7), in der die Identitäten von verlorenen oder gestohlenen Kameras (2) in einer Liste gespeichert sind,
- mindestens einen Drahtlosrouter (5), der den Datenpaketaustausch im Abdeckungsbereich eines vorbestimmten Drahtlosnetzes (W) leitet, dessen Name vorbestimmt ist,
- mindestens einen zentralen Steuerungscomputer (4), der mit dem Drahtlosnetz (W) verbunden ist,
- mindestens einen Router (6), der den Datenpaketaustausch zwischen dem Drahtlosrouter (5) und dem zentralen Steuerungscomputer (4) leitet,
wobei das Verfahren (100) ferner Folgendes umfasst:
- Rundsenden (101) einer Nachricht durch den zentralen Steuerungscomputer (4), durch die die Identitäten der Kameras (2), die mit dem Drahtlosnetz (W) verbunden sind, abgefragt werden,
- Empfangen des Abfragenachrichtpakets durch den Router (6) und Leiten dieses an den Drahtlosrouter (5) (102),
- drahtloses Rundsenden des Abfragenachrichtpakets durch den Drahtlosrouter (5) im Abdeckungsbereich des Netzes (W) (103),
- Empfangen der Abfragenachricht durch die Kamera(s) (2) im Abdeckungsbereich des Netzes (W) (104),
- Senden durch die Kamera(s) (2), die die Abfragenachricht empfängt/empfangen, der Informationen über ihre Identitätsinformationen (105) an den Drahtlosrouter (5),
- Leiten der Identitätsinformationen durch den Drahtlosrouter (5) (106) an den Router (6),
- Leiten der Identitätsinformationen durch den Router (6) (107) an den zentralen Steuerungscomputer (4),
- Vergleichen der empfangenen Identitätsinformationen durch den zentralen Steuerungscomputer (4) (108) mit der Liste in der Datenbank (7),
- Senden einer Verbotsnachricht (109) an die Kamera(s) (2), die mit den Identitätsinformationen in der Liste übereinstimmt/übereinstimmen, vom zentralen Steuerungscomputer (4) mittels der Router (5), (6),
- Empfangen der Verbotsnachricht durch die Kamera(s) (2), Anwenden des mechanischen und/oder elektronischen Verbotsvorgangs und Übertragen der Nachricht bezüglich dem erfolgreichen Prozess, nachdem der Vorgang abgeschlossen (110) wurde, an den zentralen Steuerungscomputer (4) über die Router (5), (6),
- beim Empfangen der Nachricht über den erfolgreichen Prozess, Löschen durch den zentralen Steuerungscomputer (4) (111) der entsprechenden Identitätsinformationen der Kamera(s) aus der Liste in der Datenbank (7) (111).

2. Verfahren (100) zum Detektieren der Verwendung einer verlorenen Kamera gemäß Anspruch 1, **gekennzeichnet dadurch, dass** beim Rundsenden der Abfragenachricht im Schritt des Rundsendens einer Nachricht an den zentralen Steuerungscomputer (4), durch die die Identitäten der Kameras (2) abgefragt werden, die mit einem vorbestimmten Drahtlosnetz (W) verbunden sind, ein UDP-Paket verwendet wird (101).

3. Verfahren (100) zum Detektieren der Verwendung einer verlorenen Kamera gemäß einem der vorhergehenden Ansprüche, **gekennzeichnet dadurch, dass** die Kamera(s) (2) ihre Nachrichtendaten im Schritt des Sendens der Informationen über die Identitätsinformationen der Kamera(s) (2) über Ethernet sendet/senden, wodurch die Abfragenachricht zum Drahtlosrouter (5) gebracht wird (105).

4. Verfahren (100) zum Detektieren der Verwendung einer verlorenen Kamera gemäß einem der vorhergehenden Ansprüche, **gekennzeichnet dadurch, dass** die Kamera(s) (2) ihre Nachrichtendaten im Schritt des Übertragens der Nachricht bezüglich dem erfolgreichen Prozess an den zentralen Steuerungscomputer (4) über die Router (5), (6) über Ethernet überträgt/übertragen, nachdem der mechanische und/oder elektronische Verbotsvorgang an der Kamera (2) beendet wurde (110).

5. Verfahren (100) zum Detektieren der Verwendung einer verlorenen Kamera gemäß einem der vorhergehenden Ansprüche, **gekennzeichnet dadurch, dass** der zentrale Steuerungscomputer (4) die Verbotsnachricht als TCP-Paket im Schritt des Sendens der Verbotsnachricht an die Kamera(s) (2), die mit den Identitätsinformationen in der Liste übereinstimmt/übereinstimmen, vom zentralen Steuerungscomputer (4) durch die Router (5), (6) sendet (109).

6. System (1) zum Detektieren der Verwendung einer verlorenen Kamera, das ermöglicht, zu detektieren, ob gestohlene oder verlorene Kameras gegen ihre wahren Besitzer in einem vorbestimmten Bereich verwendet werden, umfassend:
- mindestens eine Kamera (2), umfassend eine Kommunikationsschnittstellenkarte (3), die angepasst ist, der Kamera zu ermöglichen, Datenkommunikation mit der Außenwelt zu vollführen,
- mindestens eine Datenbank (7), in der die Identitäten von verlorenen oder gestohlenen Kameras (2) in einer Liste gespeichert sind,
- mindestens einen Drahtlosrouter (5), der angepasst ist, den Datenpaketaustausch im Abdeckungsbereich eines vorbestimmten Drahtlosnetzes (W) zu leiten, dessen Name vorbestimmt ist,
- mindestens einen zentralen Steuerungscomputer (4), der angepasst ist, mit dem Drahtlosnetz (W) verbunden zu werden,
- mindestens einen Router (6), der angepasst ist, den Datenpaketaustausch zwischen dem Drahtlosrouter (5) und dem zentralen Steuerungscomputer (4) zu leiten,
wobei das System ferner Folgendes umfasst:
- den zentralen Steuerungscomputer (4) angepasst zum Rundsenden (101) einer Nachricht , durch die die Identitäten der Kameras (2), die mit dem Drahtlosnetz (W) verbunden sind, abgefragt werden,
- den Router (6) angepasst zum Empfangen des Abfragenachrichtpakets und Leiten dieses an den Drahtlosrouter (5) (102),
- den Drahtlosrouter (5) angepasst zum drahtlosen Rundsenden des Abfragenachrichtpakets im Abdeckungsbereich des Netzes (W) (103),
- die Kamera(s) (2) im Abdeckungsbereich des Netzes (W) angepasst zum Empfangen der Abfragenachricht (104),
- die Kamera(s) (2), die die Abfragenachricht empfängt/empfangen, angepasst zum Senden der Informationen über ihre Identitätsinformationen (105) an den Drahtlosrouter (5),
- den Drahtlosrouter (5) angepasst zum Leiten der Identitätsinformationen (106) an den Router (6),
- den Router (6) angepasst zum Leiten der Identitätsinformationen (107) an den zentralen Steuerungscomputer (4),
- den zentralen Steuerungscomputer (4) angepasst zum Vergleichen der empfangenen Identitätsinformationen (108) mit der Liste in der Datenbank (7),
- den zentralen Steuerungscomputer (4) angepasst zum Senden einer Verbotsnachricht (109) an die Kamera(s) (2), die mit den Identitätsinformationen in der Liste übereinstimmen, vom zentralen Steuerungscomputer (4) mittels der Router (5), (6),
- die Kamera(s) (2), die die Verbotsnachricht empfangen, angepasst zum Anwenden des mechanischen und/oder elektronischen Verbotsvorgangs und Übertragen der Nachricht bezüglich dem erfolgreichen Prozess, nachdem der Vorgang abgeschlossen (110) wurde, an den zentralen Steuerungscomputer (4) über die Router (5), (6),
- beim Empfangen der Nachricht über den erfolgreichen Prozess, den zentralen Steuerungscomputer (4) angepasst zum Löschen (111) der entsprechenden Identitätsinformationen der Kamera(s) aus der Liste in der Datenbank (7) (111).

7. System (1) zum Detektieren der Verwendung einer verlorenen Kamera gemäß Anspruch 6, **gekennzeichnet durch** die Kommunikationsschnittstellenkarte (3), die eine Vielzahl von bevorzugten Ports gemäß der zu verwendenden Kommunikationsplattform aufweist.

8. System (1) zum Detektieren der Verwendung einer verlorenen Kamera gemäß den Ansprüchen 6 und 7, **gekennzeichnet durch** die Datenbank (7), in der die Kommunikationsinformationen des wahren Besitzers der Kamera (2) gespeichert sind.

9. System (1) zum Detektieren der Verwendung einer verlorenen Kamera gemäß den Ansprüchen 6 bis 8, **gekennzeichnet durch** den zentralen Steuerungscomputer (4), der zum drahtlosen Übertragen der Informationen, ob die verlorene oder gestohlene Kamera (2) in Verwendung ist, an die Informationen in der Datenbank (7) angepasst ist.

## Revendications

1. Méthode (100) de détection de perte d'usage d'une caméra, permettant de détecter si des caméras volées ou perdues sont utilisées contre leurs propriétaires légitimes dans une zone prédéterminée ;
- au moins une caméra (2) comprenant une carte d'interface de communication (3) permettant à la caméra d'effectuer la communication de données avec l'extérieur,
- au moins une base de données (7), dans laquelle l'identité de caméras volées ou perdues (2) sont répertoriées dans une liste,
- au moins un routeur sans fils (5) dirigeant l'échange du paquet de données dans la zone de couverture d'un réseau sans fils prédéterminé (W) dont le nom est prédéterminé,
- au moins un ordinateur de contrôle central (4) raccordé audit réseau sans fils (W),
- au moins un routeur (6) dirigeant l'échange du paquet de données entre le routeur sans fils (5) et l'ordinateur de contrôle central (4),
la méthode (100) comprenant en outre
- l'ordinateur de contrôle central (4) diffusant (101) un message interrogeant l'identité des caméras (2) raccordées audit réseau sans fils (W),
- le routeur (6) recevant le paquet de messages d'interrogation et le dirigeant vers le routeur sans fils (5) (102),
- le routeur sans fils (5) diffusant sans fils le paquet de messages d'interrogation dans la zone de couverture du réseau (W) (103),
- les caméras (2) de la zone de couverture du réseau (W) recevant le message d'interrogation (104),
- lesdites caméras (2), qui reçoivent le message d'interrogation, transmettant les informations en matière d'identité (105) au routeur sans fils (5),
- le routeur sans fils (5) dirigeant (106) les informations en matière d'identité au routeur (6),
- le routeur (6) dirigeant (107) les informations en matière d'identité à l'ordinateur de contrôle central (4),
- l'ordinateur de contrôle central (4) comparant (108) les informations reçues en matière d'identité avec la liste dans la base de données (7),
- l'envoi d'un message d'interdiction (109) aux caméras (2) correspondant aux informations en matière d'identité dans la liste provenant de l'ordinateur de contrôle central (4) par le biais des routeurs (5) (6),
- la (les) caméra(s) (2) recevant le message d'interdiction appliquant la procédure d'interdiction mécanique et/ou électronique, et transmettant le message concernant la réussite du processus à la suite de l'achèvement de la procédure (110) à l'ordinateur de contrôle central (4) par le biais des routeurs (5) (6),
- à la réception du message concernant la réussite du processus, l'ordinateur de contrôle central (4) effaçant (111) les informations en matière d'identité correspondant à la (aux) caméra(s) de la liste dans la base de données (7) (111).

2. Méthode (100) de détection de perte d'usage d'une caméra selon la revendication 1, **caractérisée en ce que** le module UDP est utilisé lors de la diffusion du message d'interrogation à l'étape de diffusion d'un message demandant l'identité des caméras (2) à l'ordinateur de contrôle central (4) connecté à un réseau sans fils prédéterminé (W) (101).

3. Méthode (100) de détection de perte d'usage d'une caméra selon une quelconque des revendications précédentes, **caractérisée en ce que** les caméras (2) transmettent les données de leur message par Ethernet à l'étape de transmission des informations concernant les informations sur l'identité des caméras (2) transmettant le message d'interrogation au routeur sans fils (5) (105).

4. Méthode (100) de détection de perte d'usage d'une caméra selon une quelconque des revendications précédentes, **caractérisée en ce que** les caméras (2) transmettent les données de leur message par Ethernet à l'étape de transmission du message d'après lequel le processus est correct à l'ordinateur de contrôle central (4) par les routeurs (5) (6), après l'exécution (110) de la procédure d'interdiction mécanique et/ou électronique sur la caméra (2).

5. Méthode (100) de détection de perte d'usage d'une caméra selon une quelconque des revendications précédentes, **caractérisée en ce que** l'ordinateur de contrôle central (4) transmet le message d'interdiction comme ensemble TCP à l'étape de transmission du message d'interdiction aux caméras (2) correspondant aux informations en matière d'identité dans la liste provenant de l'ordinateur de contrôle central (4) par les routeurs (5) (6) (109).

6. Système (1) de détection de perte d'usage d'une caméra, permettant de détecter si des caméras volées ou perdues sont utilisées contre leurs propriétaires légitimes dans une zone prédéterminée, comprenant :
- au moins une caméra (2) comprenant une carte d'interface de communication (3) adaptée pour permettre à la caméra d'effectuer la communication de données avec l'extérieur,
- au moins une base de données (7), dans laquelle l'identité de caméras volées ou perdues (2) est répertoriée dans une liste,
- au moins un routeur sans fils (5) adapté pour diriger l'échange de paquet de données dans la zone de couverture d'un réseau sans fils prédéterminé (W) dont le nom est prédéterminé,
- au moins un ordinateur de contrôle central (4) étant adapté pour être raccordé audit réseau sans fils (W),
- au moins un routeur (6) adapté pour diriger l'échange de paquet de données entre le routeur sans fils (5) et l'ordinateur de contrôle central (4),
le système (1) comprenant en outre
- l'ordinateur de contrôle central (4) adapté pour diffuser (101) un message interrogeant l'identité des caméras (2) raccordées audit réseau sans fils (W),
- le routeur (6) étant adapté pour recevoir le paquet de messages d'interrogation et le diriger vers le routeur sans fils (5) (102),
- le routeur sans fils (5) étant adapté pour la diffusion sans fils du paquet de messages d'interrogation dans la zone de couverture du réseau (W) (103),
- la (les) caméra(s) (2) dans la zone de couverture du réseau (W) étant adaptée(s) pour recevoir le message d'interrogation (104),
- lesdites caméras (2), qui reçoivent le message d'interrogation, étant adaptées pour transmettre les informations en matière d'identité (105) au routeur sans fils (5),
- le routeur sans fils (5) étant adapté pour diriger (106) les informations en matière d'identité au routeur (6),
- le routeur (6) étant adapté pour diriger (107) les informations en matière d'identité à l'ordinateur de contrôle central (4),
- l'ordinateur de contrôle central (4) étant adapté pour comparer (108) les informations reçues en matière d'identité avec la liste dans la base de données (7),
- l'ordinateur de contrôle central (4) étant adapté pour transmettre le message d'interdiction (109) aux caméras (2) correspondant aux informations en matière d'identité dans la liste provenant de l'ordinateur de contrôle central (4) par le biais des routeurs (5) (6),
- la (les) caméra(s) (2) recevant le message d'interdiction étant adaptées pour appliquer la procédure d'interdiction mécanique et/ou électronique, et transmettre le message concernant la réussite du processus à la suite de l'achèvement de la procédure (110) à l'ordinateur de contrôle central (4) par le biais des routeurs (5) (6),
- l'ordinateur de contrôle central (4) étant adapté, à la réception du message concernant la réussite du processus, pour effacer (111) les informations en matière d'identité correspondant aux caméras de la liste dans la base de données (7) (111).

7. Système (1) de détection de perte d'usage d'une caméra selon la revendication 6, **caractérisé par** la carte d'interface de communication (3) possédant une pluralité de ports préférés conformément à la plate-forme de communication devant être utilisée.

8. Système (1) de détection de perte d'usage d'une caméra selon les revendications 6 et 7, **caractérisé par** la base de données (7) dans laquelle sont stockées les informations de communication du propriétaire légitime de la caméra (2).

9. Système (1) de détection de perte d'usage d'une caméra selon les revendications 6 à 8, **caractérisé par** l'ordinateur de contrôle central (4) qui est adapté pour la transmission sans fils des informations, d'après lesquelles la caméra (2) perdue ou volée est en cours d'usage, aux informations de communication dans la base de données (7).
